Europäisches Patentamt

European Patent Office

Office européen des brevets

(11) Veröffentlichungsnummer: **0 416 459 A2**

# (12) EUROPÄISCHE PATENTANMELDUNG

(21) Anmeldenummer: 90116606.6

(22) Anmeldetag: 30.08.90

(51) Int. Cl.⁵: **G01B 9/02**

(30) Priorität: 02.09.89 DE 3929152

(43) Veröffentlichungstag der Anmeldung:
**13.03.91 Patentblatt 91/11**

(84) Benannte Vertragsstaaten:
**AT CH DE FR GB LI**

(71) Anmelder: **SOCIETE ANONYME DES ETABLISSEMENTS PIERRE ROCH**
**Avenue de Jolivet**
**F-54302 Lunéville(FR)**

(72) Erfinder: **Strack, Peter**
**24, Rue Gambettan**
**F-54300 Lunéville(FR)**
Erfinder: **Steiner, Christian**
**14, Rue de Sarebourg**
**F-54300 Lunéville(FR)**

(74) Vertreter: **Hofmann, Gerhard, Dipl.-Ing.**
**Patentassessor**
**Stephanstrasse 49**
**W-8500 Nürnberg(DE)**

(54) **Elektronische Auswertschaltung für ein Laser-Interferometer.**

(57) Ein Laser-Interferometer bildet für eine elektronische Auswerteschaltung ein sinusartiges und ein kosinusartiges Eingangssignal mit hohem Gleichspannungsanteil. Um diesen so zu unterdrücken, daß eine exakte Auswertung der Meßsignalanteile möglich ist, liegen die Eingangssignale jeweils am einen Eingang eines Differenzverstärkers(15,29). Deren Ausgänge liegen über Impulsformer(16,30) an einem Vorwärts-Rückwärtszähler(17) und an Schaltungen-(18,31), die aus den Gleichspannungsanteilen digitalisierte Gleichspannungswerte bilden. Der jeweilige digitalisierte Gleichspannungswert ist über einen Mikroprozessor (27) und einen Digital/Analog-Wandler (28) an den anderen Eingang des betreffenden Differenzverstärkers zurückgeführt. Der Mikroprozessor (27) leitet einen sich ändernden Gleichspannungswert nur weiter, wenn eine bestimmte Zählfrequenz des Zählers(17) überschritten ist.

## ELEKTRONISCHE AUSVERTESCHALTUNG FÜR EIN LASER-INTERFEROMETER

Die Erfindung betrifft eine elektronische Ausverteschaltung für ein Laser-Interferometer, das aus der Bewegung eines Meßtasters ein erstes Eingangssignal mit einem sinusartigen, ersten Meßsignalanteil und einem ersten Gleichspannungsanteil und ein zweites Eingangssignal mit einem kosinusartigen, zweiten Meßsignalanteil und einem zweiten Gleichspannungsantei für die Ausverteschaltung erzeugt, in der ein Vorwärts-Rückwärtszähler die Meßsignalanteile eines Meßvorgangs zählt.

Ein Laser-Interferometer mit einer derartigen Auswerteschaltung ist in der Literaturstelle "Fertigungsmeßtechnik, Handbuch für Industrie und Wissenschaft ", Herausgeber: H.- J. Warnecke und W. Dutschke, Springer-Verlag, Berlin 1984, Seite 265, 266, beschrieben. Eine derartige Einrichtung dient der Längenmessung. Bei der Bewegung des Meßtasters auftretende optische Interferenzen werden zu einem Meßwert addiert. Sinusartige und diesen gegenüber phasenversetzte, kosinusartige Meßsignalanteile werden erzeugt, um die Bewegungsrichtung des Meßtasters auswerten zu können.

Eine integrierte optische Schaltung zur Herstellung des Laser-Interferometers ist durch die Firma CSO Compagnie des Senseurs Optiques, F-39041 Grenoble, marktbekannt.

Es wurde gefunden, daß bei den genannten Eingangssignalen der Meßsignalanteil einem vergleichsweise hohen Gleichspannungsanteil überlagert ist. Dies erschwert die Auswertung der Meßsignalanteile beträchtlich, insbesondere auch deswegen, weil sich die Gleichspannungsanteile während der Betriebszeit ändern.

Aufgabe der Erfindung ist es, eine Auswerteschaltung der eingangs genannten Art vorzuschlagen, durch die der in den beiden Eingangssignalen enthaltene Gleichspannungsanteil so unterdrückt wird, daß die exakte Auswertung des sinusartigen bzw. kosinusartigen Meßsignals erleichtert ist. Kosinusartig bedeutet im hier interessierenden Zusammenhang nicht notwendig eine Phasenverschiebung um exakt 90° gegenüber dem sinusartigen Meßsignalanteil. Wesentlich ist nur, daß eine Phasenverschiebung zwischen den Meßsignalanteilen vorliegt, die der Zähler für die Richtungserkennung auswerten kann.

Erfindungsgemäß ist obige Aufgabe bei einer Auswerteschaltung der eingangs genannten Art dadurch gelöst, daß beide Eingangssignale jeweils an dem einen Eingang eines Differenzverstärkers liegen, daß an den Ausgängen der beiden Differenzverstärker über jeweils einen Impulsformer der Zähler und jeweils eine Schaltung liegen, die aus dem betreffenden Eingangssignal einen dessen Gleichspannungsanteil entsprechenden digitalisierten Gleichspannungswert bildet, daß der digitalisierte Gleichspannungswert über eine Steuerschaltung und einen D/A-Wandler als Kompensationswert an den anderen Eingang des betreffenden Differenzverstärkers zurückgeführt ist und daß die Steuerschaltung einen sich ändernden Gleichspannungswert nur weiterleitet, wenn eine bestimmte Zählfrequenz des Zählers überschritten ist.

Dadurch ist erreicht, daß mittels der Impulsformer aus den sinusartigen bzw. kosinusartigen Meßsignalanteilen scharfe Rechtecksignalimpulse für den Zähler erzeugt werden können. Die Gleichspannungsanteile der Eingangssignale sind an den Eingängen der Impulsformer weitestgehend unterdrückt.

Die Digitalisierung der Gleichspannungsanteile erleichtert die Auswertung deren Änderungen und die Speicherbarkeit.

In bevorzugter Ausgestaltung der Erfindung erfaßt die den digitalisierten Gleichspannungswert bildende Schaltung den oberen und den unteren Scheitelwert des jeweiligen ersten bzw. zweiten Eingangssignals und gleicht diese Werte in digitalisierter Form zum digitalisierten Gleichspannungswert aus. Mit dieser Spitzenwertspeicherung ist eine sehr schnelle Anpassung an den jeweiligen Gleichspannungsanteil der beiden Eingangssignale möglich. Statt dessen könnte auch ein Tiefpaßfilter bzw. ein Gleichrichter verwendet werden. In diesem Falle wäre jedoch die Anpassung des digitalisierten Gleichspannungswertes an den tatsächlichen Gleichspannungsanteil träger.

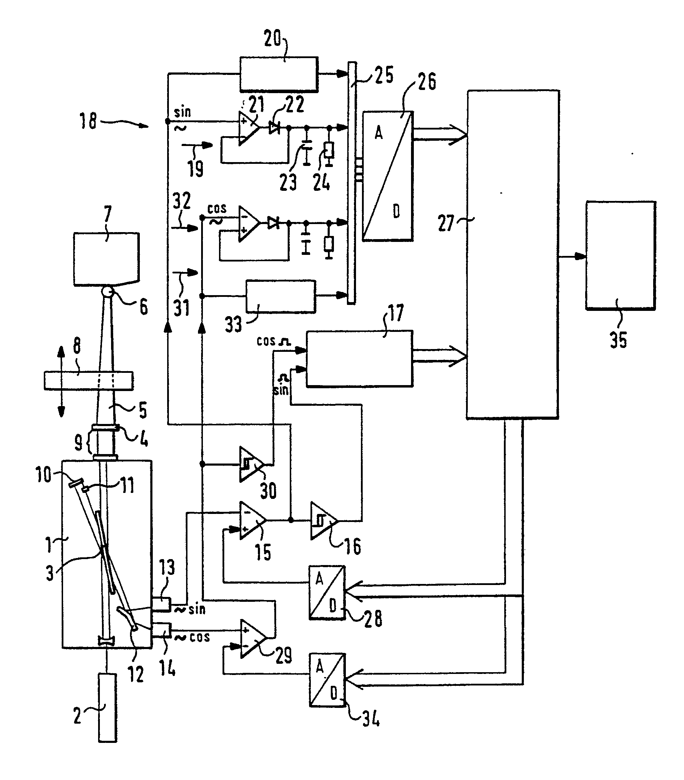

Weitere vorteilhafte Ausgestaltungen der Erfindung ergeben sich aus den Unteransprüchen und der folgenden Beschreibung eines Ausführungsbeispiels. Die Figur zeigt ein Blockschaltbild einer Auswerteschaltung bei einem Laser-Interferometer.

An einer integrierten Optik(1) ist ein Laser(2) angeordnet. Die integrierte Optik(1) weist im Strahlengang des Lasers (2) einen halbdurchlässigen Spiegel(3) auf. Im geraden Strahlengang des Lasers(2) steht eine Spiegel(4), der an einem Meßtaster(5) befestigt ist. Der Meßtaster(5) ist in Richtung des Strahlengangs verschieblich. Er weist einen Tastkopf(6) auf, der zur Anlage an einem zu vermessenden Werkstück(7) bestimmt ist. Am Meßtaster(5) ist ein Griffglied(8) angeordnet, an dem sich der Meßtaster(5) auch ohne ein Werkstück(7) motorisch verschieben läßt. Zwischen dem Spiegel (4) und der integrierten Optik(1) besteht ein Meßabstand(9), der der möglichen Meßlänge entspricht.

Der halbdurchlässige Spiegel(3) reflektiert einen Teil der Strahlung zu einem Spiegel(10) und einem diesen gegenüber um etwa ein Viertel der Wellenlänge versetzten weiteren Spiegel(11). Bei der Bewegung des Meßtasters(5) entstehen Interferenzen zwischen dem von dessen Spiegel(4) reflektierten Licht und dem vom Spiegel(10) reflektierten Licht an einem weiteren Spiegel(12). Ebenso entstehen Interferenzen zwischen dem vom Spiegel(4) reflektierten Licht und dem vom Spiegel(11) reflektierten Licht. Der Spiegel(12) reflektiert zu einer Fotodiode oder einem Fototransistor(13) und einer Fotodiode oder Fototransistors(14).

Bei einer gleichförmigen Bewegung des Meßtasters(5) tritt am Ausgang des Fototransistors(13) ein erstes Eingangssignal für die nachfolgende Auswerteschaltung auf, das einen hohen Gleichspannungsanteil aufweist, dem ein sinusartiger Meßsignalanteil überlagert ist. Am Fototransistor(14) tritt ein zweites Eingangssignal für die Auswerteschaltung auf, das ebenfalls einen hohen Gleichspannungsanteil aufweist.

Das erste Eingangssignal ist an den negativen Eingang eines ersten Differenzverstärkers(15) gelegt. An dessen Ausgang liegt über einen ersten Impulsformer(16), beispielsweise Schmitt-Trigger, ein Vorwärts-Rückwärtszähler(17).

An den Ausgang des ersten Differenzverstärkers(15) ist auch eine Schaltung(18) angeschlossen, die aus dem betreffenden Eingangssignal einen dessen Gleichspannungsanteil entsprechenden digitalisierten Gleichspannungswert bildet. Die Schaltung(18) weist einen Scheitelwertmesser(19) für die obere Scheitelspannung des Eingangssignals und einen Scheitelwertmesser(20) für die untere Scheitelspannung des Eingangssignals auf. Der Scheitelwertmesser(19) arbeitet mit einem Operationsverstärker(21), einer diesem nachgeschalteten Diode(22), einem Speicherkondensator(23) und einem Parallelwiderstand(24). Der Scheitelwertmesser(20) ist entsprechend mit umgepolter Diode aufgebaut.

Die Scheitelwertmesser(19,20) sind über einen Analog-Multiplexer(25) und einen Analog/Digital-Wandler(26) an einen Mikroprozessor(27) angeschlossen. In diesem wird der Gleichspannungswert ermittelt. Ist beispielsweise ein oberer Scheitelwert von 11 mV und ein nachfolgender unterer Scheitelwert von 9 mV gemessen, dann wird daraus ein Gleichspannungs korrekturwert von —1 mV gebildet.

Der Mikroprozessor(27), an dem auch der Zähler(17) liegt, gibt den Gleichspannungswert über einen Digital/Analog-Wandler(28) auf den positiven Eingang des ersten Differenzverstärkers(15). Dies erfolgt jedoch nur dann, wenn der Zähler(17) mit einer gewissen Mindestfrequenz, beispielsweise 100 Hz bis 500 Hz, arbeitet. Arbeitet er mit einer kleineren Frequenz, dann bleibt die an den positiven Eingang des Differenzverstärkers(15) gelegte Kompensations-Gleichspannung gegenüber einem vorherigen Wert unverändert. Dadurch ist gewährleistet, daß auch bei einer langsamen Bewegung des Meßtasters(5) über den Impulsformer(16) Zählimpulse für den Zähler(17) entstehen und nicht über die Schaltung(18) wegkompensiert werden.

Für die Auswertung des zweiten Eingangssignals sind den oben beschriebenen Baugruppen entsprechende Baugruppen vorgesehen. Das zweite Eingangssignal liegt am positiven Eingang eines zweiten Differenzverstärkers (29). Dessen Ausgang ist über einen zweiten Impulsformer(30) mit dem Zähler(17) verbunden. Der Ausgang des Differenzverstärkers (29) liegt außerdem an einer Schaltung (31), die aus dem zweiten Eingangssignal einen entsprechenden digitalisierten Gleichspannungswert bildet. Die Schaltung(31) weist Scheitelwertmesser(32,33) auf, die wie die Scheitelwertmesser(19,20) aufgebaut sind. Die Scheitelwertmesser(32,33) liegen über den Multiplexer(25) und den Analog/Digital-Wandler(26) an dem Mikroprozessor(27). Dieser legt den ermittelten digitalisierten Gleichspannungswert des zweiten Eingangssignals bei den genannten Bedingungen über einen Digital-Analog/Wandler (34) an den negativen Eingang des Differenzverstärkers(29).

An den Mikroprozessor (27) ist eine Meßwertanzeigeeinrichtung(35) angeschlossen. Vom Mikroprozessor(27) werden auch Umwelteinflüsse, beispielsweise Temperatur und Luftdruck , die sich auf das Zählergebnis auswirken, berücksichtigt.

Die Arbeitsweise der beschriebenen Schaltung ist etwa folgende:

In einer vor dem Meßbetrieb erfolgenden Routine wird der Meßtaster(5) verschoben. Dadurch werden über die Schaltungen(18,31) die Grund-Gleichspannungsanteile des ersten, sinusförmigen und des zweiten, kosinusförmigen Eingangssignals ermittelt und über die Digital/Analog-Wandler(28,34) an die Differenzverstärker(15,29) gelegt. Diese Grund-Gleichspannungswerte bleiben beim anschließenden Meßbetrieb erhalten, bis sich der eine und/oder der andere Gleichspannungsanteil ändern.

Bei einem Meßvorgang verschiebt sich der Spiegel (4) des Meßtasters(5), so daß infolge der optischen Interferenzen Spannungsschwingungen an den Ausgängen der Differenzverstärker(15,29) auftreten. Diese werden über die Impulsformer(16,30) im Zähler (17) je nach der Bewegungsrichtung des Meßtasters(5) zur Vorwärts- bzw. Rückwärtszählung ausgewertet. Die Zählfrequenz und der Zählerstand werden im Mikroprozessor (27) weiterverarbeitet.

Parallel hierzu werden in den Schaltungen-

(18,31) die Gleichspannungsanteile an den Ausgängen der Differenzverstärker(15,29) überwacht. Eine Änderung der Gleichspannungsanteile kann auf verschiedenen baulichen, a lterungs- oder umweltbedingten Einflüssen beruhen. Eine Änderung der Gleichspannungsanteile erfaßt der Mikroprozessor-(27). Er ändert dann über die Digital/Analog-Wandler(28,34) die Grund-Gleichspannungswerte an den Differenzverstärkern(15,29) entsprechend.

Eine Änderung des Gleichspannungsanteils wird dem Mikroprozessor(27) jedoch auch dann vorgetäuscht, wenn der Meßvorgang sehr langsam abläuft. Er würde dementsprechend die Gleichspannungswerte an den Differenzverstärkern(15,29) so ändern, daß auch die Meßsignalanteile der Eingangssignale unterdrückt werden. Dies ist jedoch dadurch verhindert, daß der Mikroprozessor(27) Änderungen der Gleichspannungswerte nur dann an die Differenzverstärker(15,29) weitergibt, wenn der Zähler(17) mit einer gewissen Zählfrequenz arbeitet. Diese ist an die Einstellgeschwindigkeit der Schaltungen(18,31) angepaßt. Es führen also auch bei langsamen Meßvorgängen trotz Kompensation des Gleichspannungsanteils die die Meßsignalanteile bildenden langsamen Schwingungen zu den gewünschten Zählimpulsen.

Bei einem anderen Ausführungsbeispiel der Erfindung können die Schaltungen(18,31) anstelle der Scheitelwertmesser(19,20 bzw. 32,33) Tiefpaßfilter oder andere Gleichrichter aufweisen.

Anstelle des Mikroprozessors kann als Steuerschaltung, die die Zählfrequenz auswertet, auch eine andere Schaltung, beispielsweise ein Hochpaßfilter, vorgesehen sein.

**Ansprüche**

1. Elektronische Auswerteschaltung für ein Laser-Interferometer, das aus der Bewegung eines Meßtasters ein erstes Eingangssignal mit einem sinusartigen, ersten Meßsignalanteil und einem ersten Gleichspannungsantei und ein zweites Eingangssignal mit einem kosinusartigen, zweiten Meßsignalanteil und einem zweiten Gleichspannungsanteil für die Auswerteschaltung erzeugt, in der ein Vorwärts-Rückwärtszähler die Meßsignalanteile eines Meßvorgangs zählt,
dadurch gekennzeichnet,
daß beide Eingangssignale jeweils an dem einen Eingang eines Differenzverstärkers(15,29) liegen, daß an den Ausgängen der beiden Differenzverstärker(15,29) über jeweils einen Impulsformer(16,30) der Zähler(17) und jeweils eine Schaltung (18,31) liegen, die aus dem betreffenden Eingangssignal einen dessen Gleichspannungsanteil entsprechenden, digitalisierten Gleichspannungswert bildet, daß der digitalisierte Gleichspannungswert über eine Steuerschaltung (27) und einen Digital/Analog-Wandler(28,34) als Kompensationswert an den anderen Eingang des betreffenden Differenzverstärkers(15,29) zurückgeführt ist und daß die Steuerschaltung (27) einen sich ändernden Gleichspannungswert nur weiterleitet, wenn eine bestimmte Zählfrequenz des Zählers(17) überschritten ist.

2. Auswerteschaltung nach Anspruch 1,
dadurch gekennzeichnet,
daß die den digitalisierten Gleichspannungswert bildende Schaltung(18,31) den oberen und den unteren Scheitelwert des jeweiligen ersten bzw. zweiten Eingangssignals erfaßt und diese Werte in digitalisierter Form zum digitalisierten Gleichspannungswert ausgeglichen werden.

3. Auswerteschaltung nach Anspruch 2,
dadurch gekennzeichnet,
daß die Scheitelwerte über einen Multiplexer(25) und einen Analog/Digital-Wandler(26) einem Mikroprozessor(27) zugeführt sind, der die Gleichspannungswerte bildet.

4. Auswerteschaltung nach einem der vorhergehenden Ansprüche,
dadurch gekennzeichnet,
daß an den Mikroprozessor(27) auch der Zähler(17) angeschlossen ist und er die Steuerschaltung bildet.

5. Auswerteschaltung nach einem der vorhergehenden Ansprüche,
dadurch gekennzeichnet,
daß die bestimmte Zählfrequenz an die Einstellgeschwindigkeit der Schaltungen(18,31) angepaßt ist, die den jeweiligen Gleichspannungswert bilden.